# EUROPEAN PATENT APPLICATION

(11) **EP 2 897 056 A1**
(43) Date of publication of application: **22.07.2015**
(21) Application number: 12886190.3
(22) Date of filing: 09.10.2012
(51) Int. Cl.: G06F 17/30

(54) **METHOD AND SYSTEM FOR MAKING WEB APPLICATION OBTAIN DATABASE CHANGE**

(71) Applicant: Huawei Technologies Co., Ltd., Longgang District Shenzhen, Guangdong 518129 (CN)
(72) Inventor: HU, Lixin, Shenzhen Guangdong 518129 (CN); SUN, Qian, Shenzhen Guangdong 518129 (CN)
(74) Representative: Körber, Martin Hans
(86) International application number: PCT/CN2012/082628
(87) International publication number: WO 2014/056145

(57) **Abstract**

An embodiment of the present invention provides a system for making a Web application obtain a database change, the system includes a browser, a Web database, and a Web application running in the browser, where the browser includes: a database processing component of the browser, configured to obtain an operation request of the Web application and complete an operation to the Web database according to the operation request; an event processing component of the browser, configured to generate a database event according to the operation completed in the Web database where the database event is monitored by the Web application; and when detecting generation of the database event, the Web application obtaining a database change content from an attribute of the database event. The Web application is enabled to obtain the database change from the attribute of the database event and complete corresponding processing.

## Description

### TECHNICAL FIELD

The present invention relates to the browser technology, and more particularly to a method and a system of using a browser Web database.

### BACKGROUND

An earlier browser can only simply save a short piece of text data locally via cookies, while the current mainstream browser has already supported more powerful local storage solutions, such as Web Storage and Web SQL Database technical standards. Besides, there is still a fast developing and increasingly improved browser database standard Indexed DB, for storing large amounts of structured data in a browser, and providing an index to guarantee high-efficiency query. Compared to the Web SQL Database where the SQL statement is passed to JavaScript API as a character string parameter, a lightweight NoSQL non-relational database Indexed DB has a much simpler grammar structure, so that it is easier for a developer to implement a Web application supporting a local database.

It is very important for a Web application to locally store data in a browser, since the Internet is neither ubiquitous nor fast enough. Local storage allows the developer to store some data in a local computer for fast processing, which means that applications, such as Web mailbox and online document editing can be used offline, and the data can be cached locally for future use, so that the Web application can be faster and more reliable, and user experience can be better. It is necessary to store large-scale data in the Web application with a database. Data in the database change constantly with the service logic, however, the existing browser database does not provide corresponding mechanism to make the Web application conveniently obtain the data change. The Web application only can obtain the data change through interactions between different pages, such implementation has relatively low efficiency or can cause relatively high coupling between modules.

### SUMMARY

The present invention provides a system and a method for making a Web application obtain a database change, so that the Web application can timely and effectively obtain a data change of a browser Web database.

According to a first aspect, there is provided a system for making a Web application obtain a database change, including a browser, a Web database, and a Web application running in the browser, and the browser includes:
a database processing component of the browser, configured to obtain an operation request of the Web application, and complete an operation to the Web database according to the operation request;
an event processing component of the browser, configured to generate a database event according to the operation completed in the Web database, where the database event is monitored by the Web application; and the Web application obtains database change content from an attribute of the database event when detecting generation of the database event.

In a first possible implementation mode according to the first aspect, the Web application includes a first page and a second page, the system specifically includes: the database processing component of the browser is configured to obtain the operation request of the Web application, and complete the operation to the Web database according to the operation request; where the operation request derives from the first page of the Web application; the event processing component of the browser is configured to generate the database event according to the operation completed in the Web database, where the database event is monitored by the Web application; and the Web application obtaining database change content from an attribute of the database event when detecting the generation of the database event, and performing synchronous processing to a portion related to the database change content in the second page.

In a second possible implementation mode according to the first aspect, the attribute of the database event specifically includes: change information that describes the Web database, where the change information includes an database name, a table name and a change entry that have been operated in the database according to the operation request of the Web application; the obtaining, by the Web application, the content relevant to the database from the attribute of the database event, specifically includes: obtaining, by the Web application, the database name, the table name and the change entry from the attribute of the database event, and determining the Web database change content.

In a third possible implementation mode according to the first implementation mode or according to the second implementation mode, the change entry specifically includes: one or more of an operation type of a data record, a key value, a new record value and an old record value.

In a fourth possible implementation mode according to the third implementation mode, the change entry at least includes one of the following operation types: when the operation type is clear, the key value, the new record value and the old record value of a corresponding change entry are all null; when the operation type is deletion, the key value of the corresponding change entry is a key value of a deleted record, and the old record value of the corresponding change entry is a record value of the deleted record; when the operation type is addition, the key value of the corresponding change entry is a key value of an added record, and the new record value of the corresponding change entry is a record value of the added record; when the operation type is update, the key value of the corresponding change entry is the key value of an updated record, the new record value of the corresponding change entry is a new record value of the updated record, and the old record value of the corresponding change entry is an old record value of the updated record.

In a fifth possible implementation mode according to the fourth possible implementation, if the operation request of the Web application in the browser is a put operation, the completing the operation to the Web database according to the operation request, further includes: the database processing component of the browser checks, according to the database name, the table name and the key value in the operation, whether the database already has a record with the same database name, the table name and the key value, if the record already exists, then determines to change the put operation to entry update; if the database has no corresponding records, then determines to change the put operation to entry addition.

In a sixth possible implementation according to the fourth implementation, the change entry is arranged in a time sequence of a corresponding database operation, if, in the operation request of the Web application, more than one operation is performed to a record, then the change entry only contains the operation of the last time.

In a seventh possible implementation according to any one of the proceeding implementation modes, the Web application in the browser monitors the database event using one of window, document, body or database object.

According to a second aspect, there is provided a method for making a Web application obtain a database change, where a browser, a Web database, a first Web application and a second Web application are included, and the method includes:
obtaining an operation request of the first Web application, and completing an operation to the Web database according to the operation request; where the first Web application and the second Web application run in the browser;
generating a database event according to the operation completed in the Web database, where the database event is monitored by the second Web application;
obtaining, by the second Web application, database change content from an attribute of the database event when detecting generation of the database event.

In a first possible implementation mode according to the second aspect, the attribute of the database event specifically includes: change information that describes the Web database, where the change information includes a database name, a table name and a change entry to be operated by the operation request of the first Web application; the obtaining, by the second Web application, the content relevant to the database from the attribute of the database event, specifically includes: obtaining, by the second Web application, the database name, the table name and the change entry from the attribute of the database event, and determining the Web database change content.

In a second possible implementation mode according to the first implementation mode, the change entry specifically includes: one or more of an operation type of a data record, a key value, a new record value and an old record value.

In a third possible implementation mode according to the second implementation mode, the change entry at least includes one of the following operation types: when the operation type is clear, the key value, the new record value and the old record value of a corresponding change entry are all null; when the operation type is deletion, the key value of the corresponding change entry is a key value of a deleted record, and the old record value of the corresponding change entry is a record value of the deleted record; when the operation type is addition, the key value of the corresponding change entry is a key value of an added record, and the new record value of the corresponding change entry is a record value of the added record; when the operation type is update, the key value of the corresponding change entry is a key value of an updated record, the new record value of the corresponding change entry is a new record value of the updated record, and the old record value of the corresponding change entry is an old record value of the updated record.

In a fourth possible implementation mode according to the third implementation mode, if the operation request of the first Web application in the browser is a put operation, then the completing the operation to the Web database according to the operation request, specifically includes: checking, according to the database name, the table name and the key value in the operation, whether the database already has a record with the same database name, the table name and the key value, if the record already exists, then determining to change the put operation to entry update; if the database has no corresponding record, then determining to change the put operation to entry addition.

In a fifth possible implementation mode according to any one of the proceeding implementation modes, a database event parameter is carried in the operation request of the first Web application, so as to, according to the parameter, determine whether to generate a database event after a database transaction is completed successfully.

In the above-mentioned aspects of the present invention, corresponding database event is generated by the browser according to the Web database change, so that the Web application in the browser can monitor the database event, and allocate corresponding event handling functions, and thereby the Web application can obtain the database change from the attribute of the database event and complete the corresponding processing. In this way, different pages or modules of a Web application can easily obtain the database change.

### BRIEF DESCRIPTION OF DRAWINGS

FIG. 1 is a schematic diagram of a computing environment according to an embodiment of the present invention;
FIG. 2 is a signaling flowchart according to an embodiment of the present invention;
FIG. 3 is a schematic diagram of a browser frame according to an embodiment of the present invention;
FIG. 4 shows a content for a database event according to an embodiment of the present invention;
FIG. 5 shows another manner of a content for a database event according to an embodiment of the present invention;
FIG. 6 is a signaling flowchart according to another embodiment of the present invention;
FIG. 7 shows a step for generating a database event according to an embodiment of the present invention;
FIG. 8 shows a step for determining an attribute for a database event according to an embodiment of the present invention.

### DESCRIPTION OF EMBODIMENTS

The technical solutions in the embodiments of the present invention are hereinafter described clearly and completely with reference to the accompanying drawings in the embodiments of the present invention. Obviously, the embodiments described here are part of the embodiments of the present invention and not all of the embodiments. Based on the embodiments of the present invention, persons skilled in the art can derive all other embodiments without any creative efforts all fall within the scope of the present invention.

The data structures and code described in this detailed description are typically stored on a computer-readable storage medium, which may be any device or medium that can store code and/or data for use by a computer system. This includes, but is not limited to, volatile memory, non-volatile memory, magnetic and optical storage devices such as magnetic disks, magnetic tapes, CDs, DVDs, or other media capable of storing computer-readable media now known or later developed.

The computer herein refers to a microprocessor-based terminal device with computing capability, which includes, but is not limited to, any kind of computer system, such as a personal computer, a tablet computer, a portable computer, a mobile phone.

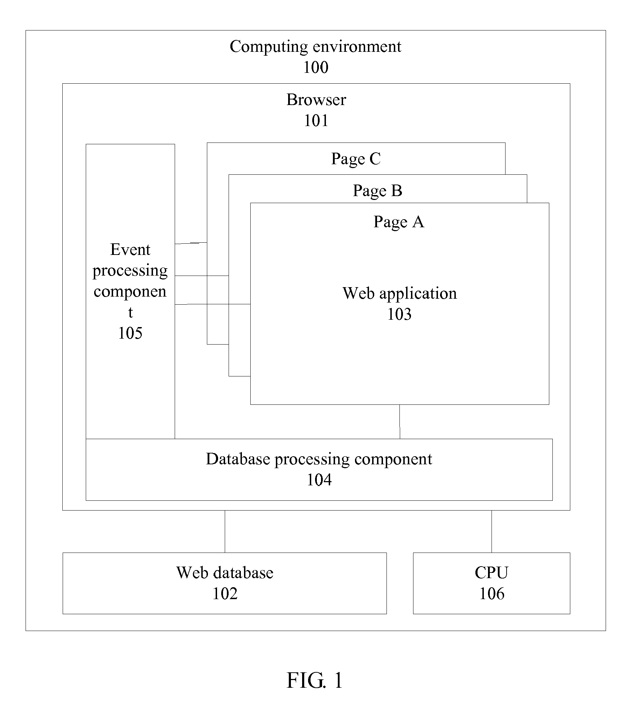

An embodiment of the present invention provides a system for obtaining a Web database change, referring to FIG. 1, a computing environment 100 of the system includes: a browser 101, a Web database 102, and a CPU processor 106. The browser 101 includes: a database processing component 104, an event processing component 105 and a Web application 103. Each Web application can open a plurality of pages in the browser, for example, page A, page B and page C in FIG. 1 belong to a same Web application, and URL addresses of these pages usually belong to a same domain, for example, www.huawei.com, and particularly, the address of page A can be www.huaweidevice.com/cn/method=index, while the address of page B can be www.huaweidevice.com/cn/method=getFaqInfo=9097. Besides, the Web application also can be a browser extension, which generally consists of HTML and JavaScript, just like the Web application, and can create and access the Web database via the browser. Each Web application can create one or more Web databases via the browser, the Web database is usually stored in a computing environment in a document manner, which can be on a local computer or on other computer in the network. The solution of obtaining the database change by the Web application in the present invention is not only applicable to the interiors of a same Web application, such as between page A and page B described above; but also applicable to different Web applications, such as between the above browser extensions.

The method of the system mainly includes the steps as follows:

S101, A database processing component 104 of the browser obtains an operation request of the Web application 103, and completes an operation to the Web database according to the operation request;

Preferably, the operation request is created by the Web application 103 according to the operation of the user in the browser.

S102, The event processing component 105 of the browser generates a database event according to the operation completed in the Web database, and the database event is monitored by the Web application 103;

Preferably, the database event includes an event type, for example, the event type is database;

S103, The Web application 103 obtains a changed content from an attribute of the database event when detecting generation of the database event.

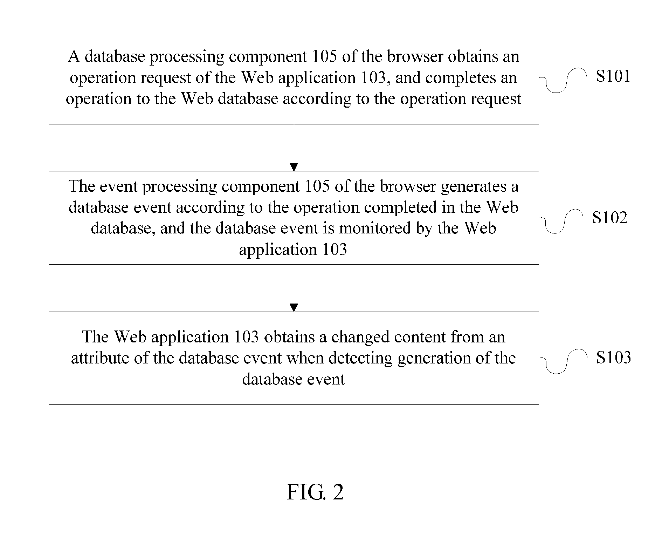

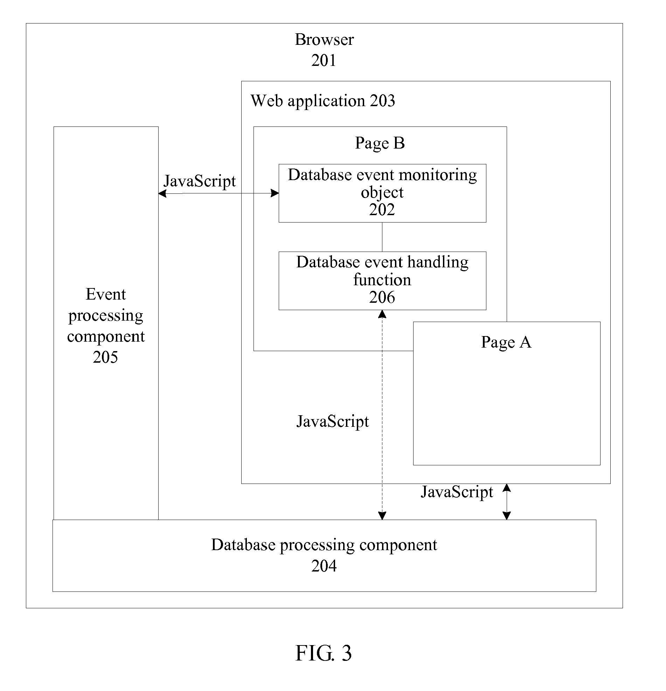

FIG. 3 is a computing environment based on FIG. 1, corresponding to a structural diagram for a browser of the system according to the present invention, and the signaling flowchart thereof is shown in FIG. 2. Referring specifically to FIG. 3, a Web application 203 in a browser 201 opens different pages of the application, a first page A of the browser and a second page B of the browser, hereinafter referred to as page A and page B for short, and the page A and page B also can be considered as two objects of the Web application 203 and the two pages belong to a same domain, for example both belonging to the domain with a domain name www.huawei.com. Multiple pages of the browser can be located at different tabs of a same window, or at different windows of a same browser. In page A, the Web application 203 sends an operation request to a database processing component 204 of the browser, the database processing component 204 performs an operation to the Web database according to the operation request; during implementation, communication between the Web application 203 and the database processing component 204 can be achieved through JavaScript API.

The event processing component 205 of the browser generates a database event according to the operation completed in the Web database corresponding to the operation request, and the database event is monitored by the Web application 203.

The database event being monitored by the Web application 203, in particular, includes: for another page B, the Web application 203 allocates a database event monitoring object 202 and a database event handling function 206 for page B, the database event monitoring object particularly can be any one of window, document, body or database object; the method for monitoring a database event by the database event monitoring object 202 particularly is: registering, on the event processing component 205 of the browser, information for monitoring the database event of the browser, then the event processing component 205 can send the database event to the database event monitoring object 202 according to registration information of the database event monitor object 202 after the database event is generated.

The Web application 203 obtaining the changed content of the database from the attribute of the database event, in particular, includes: preferably, the database event monitoring object 202 forwards the database event to the database event handling function 206 after receiving the database event from the event processing component 205; when there are many operation steps and it is necessary to record the environment of the steps, optionally, the event processing component 205 records data of each step, carries the data in the database event and transfers to the database event monitoring object 202.

Optionally, after the database event monitoring object 202 receives the database event from the event processing component 205, the database event handling function 206 obtains, from the Web database, via the database processing component 204, the Web database content described by the attribute of the database event according to the attribute of the database event; the attribute of the database event includes change information that describes the Web database, and the change information includes a database name , a table name, and identifiers of elements in a change entry, which have been operated in the browser according to the operation request of the Web application. The identifiers of the elements in the change entry includes: an identifier corresponding to a key value, an identifier corresponding to a new record value and an identifier corresponding to an old record value; there can be one or more identifiers corresponding to the new record value depending on the actual partition of contents stored in the Web database. This optional manner is applicable to a case where only a final result needs to be obtained and the result occupies more resources.

During the implementation, both communication between the database processing component 204 and the database event handling function 206 and communication between the database event monitoring object 202 and the event processing component 205 can be achieved through JavaScript API.

The event processing component 205 generates a database event after a database operation is completed, page B obtains the attribute of the database event via the database event handling function 206 and then performs corresponding processing according to the changed content of the database in the attribute. In practical use, page A also can have a database event monitoring object 202' (not shown in FIG. 3) and a database event handling function 206' (not shown in FIG. 3) with the same functions as those of page B, so as to achieve monitoring of the database operation in page B by page A through monitoring the database event generated in the event processing component 205 of the browser, and finally achieve the purpose of mutual monitoring between page A and page B.

The browser can set different times for processing the attribute of the database event depending on whether page B and page A are within one browser, which particularly is that:

1) when page A and page B are alternatively displayed on different tabs in a same browser (that is, only one page of page A and page B can be displayed at the same time), the browser can be set to enable the database event handling function 206 to process the attribute of the database event only when page A is switched to page B, and thus a monitoring result can be normally presented on page B while a frequency of processing the attribute of the database event is minimized.

2) when page A and page B are displayed in different windows of the same browser, the browser can be set to enable the database event handling function 206 to process the attribute of the database event once obtaining the attribute of the database event, that is, to update, in page B, a content corresponding to a change entry that is in the same table and belongs to the same database as page A , so that the content with the same attribute can change and update in page A and page B synchronously; this is for ensure a real-time update of the content monitored by the application of page B when page A and page B are displayed in parallel.

The procedure of operating by the user in the browser (the browser generates an operation request of the Web application) can be classified into: 1) after parameters are input on page A, operations on date of page A can be completed only after an acknowledgment button on page A is clicked, then the click of the acknowledgment button can be taken as a triggering point for initiating an operation request of the Web application; 2) after the parameters are input in a certain column on page A (the certain column can correspond to a certain item in the change entry), once a mouse focus is shifted to other column, the operation request of the Web application is triggered to be sent. Specific implementations are not limited to the two types listed above, and it is also possible to trigger the sending of the operation request of the Web application by other operations related to the browsers.

In an embodiment, a database event is preferably generated by: 1) recording all the Web application operations corresponding to a certain change entry on page A, then triggering to generate a database event, where the triggering manner can be any of the above two manners; during the process of generating the database event, contents of all the recorded Web application operations corresponding to the certain change entry being included in the attribute of the database event, so that the database event monitoring object 202 on page B can obtain, from the attribute of the database event, operation contents of all the Web application operations corresponding to the change entry. or,

2) only recording a final operation result of the user on page A, that is, a result that is saved in the database after the operation to the database is completed. In this way, a result stored in the database after the operation request of the Web application is completed can be carried directly when the database event is generated.

The operation request of the Web application includes a parameter for generating a database event, and the browser can determine, according to the parameter, whether to generate the database event after the operation request of the Web application is completed. In practical implementations, the parameter for generating a database event can be set in the database processing component 204, and needs not to be carried in the operation request of the Web application, thus achieving optional generation of the database event with respect to an operation to a certain page or to a certain object on a page.

By way of example, when the operation request of the Web application is executed, a "suppressevent" parameter can be designated and then the database event is not generated when the event parameter is used. The parameter can be used to avoid an endless loop, and can designate, in the database event handling function, that do not generate an event when an operation is performed to the database. For example, in the handing function that monitors the database event, when update of a certain record is detected, performing the database update operation once more may lead to an endless loop. The parameter also can avoid some unnecessary database events, for example, some database operations do not need to be monitored, so as to save system resources.

Alternatively, it is also possible that default transaction indicates that do not generate an event, and the database event can be generated only when a "firedatabaseevent" parameter is designated. It helps save system resources and achieves better compatibility. It is unnecessary for many Web applications to monitor the database event, so not generating an event by default is an optimal solution.

The attribute of the database event includes change information that describes a database change, where the change information includes a database name, a table name and a change entry which change due to the operation request of the Web application, and information of the change entry is obtained by the Web application in the browser from the attribute of the event through the database event handling function, and the database change is obtained by the Web application according to the change information.

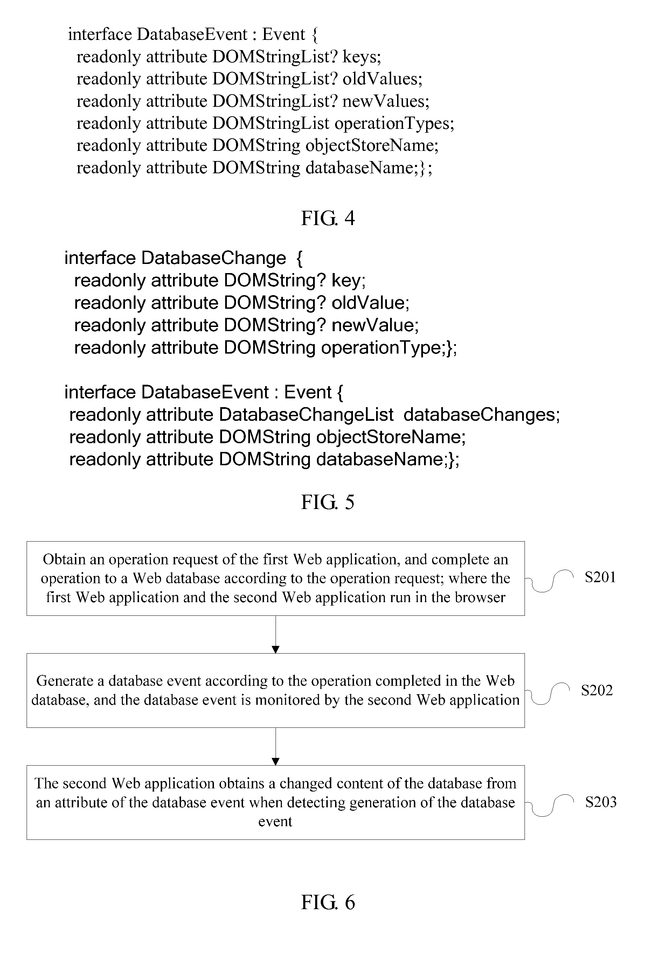

FIG. 4 shows a content of a database event according to an embodiment of the present invention, which includes some read-only attributes (readonly attribute) with character strings (DOMString) or character string arrays (list DOMStringList). Each item of the change entry includes an operation type (operationType) of a data record, and an key value (key), an old value (oldValue) and a new value (newValue) which are optional, and data of these attributes can be saved as an array, such as an attribute key value (keys) is a character string array (DOMStringList). The change entry at least includes one of the following operation types:

when the operation type is clear, the key value, the new record value and the old record value of the corresponding change are all null; when the operation type is deletion, the key value of the corresponding change entry is the key value of the deleted record, and the old record value of the corresponding change entry is the record value of the deleted record; when the operation type is addition, the key value of the corresponding change entry is the key value of the added record, and the new record value of the corresponding change entry is the record value of the added record; when the operation type is update, the key value of the corresponding change entry is the key value of the updated record, the new record value of corresponding change entry is the new record value of the updated record, and the old record value of corresponding change entry is the old record value of the updated record.

FIG. 5 shows another equivalent manner of describing a content of a browser database event according to an embodiment of the present invention, which can be used in the system shown in FIG. 1 and FIG. 3. A database event object can include a database change list DatabaseChangeList object, and the list object specifically includes detailed change entries of data records. In this embodiment, a set of one or more operation requests of the Web application is called a database transaction.

If the database operation request of the Web application in the browser includes a put (Put) operation, the database processing component of the browser checks, according to the database name, the table name and the key value in the operation, whether the database already has a record with the same database name, the table name and the key value; if it already exists, then determine to change the operation type of the change entry corresponding to the operation to be entry update, and then within the attribute of the database event generated by the event processing component 205 of the browser, the corresponding key value is the key value of the updated record, the new record value of the corresponding entry is the new record value of the updated record, and the old record value of the corresponding entry is the old record value of the updated record.

If the database doesn't have a record with the same database name, table name and key value, then determine to change the operation type of the change entry corresponding to the operation to entry addition, and then within the attribute of the database event generated by the event processing component 205 of the browser, the corresponding key value is the key value of the added record, the new record value of the corresponding entry is the record value of the added record.

In a Web application for providing a spreadsheet, a same record is often operated for several times, and data are submitted only when being saved by a user or saved automatically. For example, the value of a certain field in a record is modified, and then the record is deleted, then the corresponding database transaction when the data are saved and submitted by the user includes two operations of modification and deletion.

The change entry in the attribute of the database event is arranged in a time sequence of corresponding database operations; if the final operation in the database transaction is a clear operation, that is, deleting all the records in the table, then the corresponding key value, the new record value and the old record value are all null, in this case, it is not appropriate to incorporate the key values and old record values of all the records in the event, because the data amount may be very large, and generally unnecessary, and therefore it is possible to only record relevant operations after the clear operation. For example, when adding products in a shopping basket module of an e-commerce Web application, and an option of firstly clearing the existing items in the shopping basket is provided at the same time, in this way, the corresponding database transaction includes the first clear operation to the table data of the shopping basket, and then adding records of new items. Alternatively, the user modifies the number of items in the shopping basket, but fails to immediately submit it, and then performs the clear operation of the shopping basket and submits it, in this way, corresponding database transaction only includes the clear operation.

In addition to the case that the change entry in the attribute of the database event is arranged in a time sequence of corresponding database operation, another manner is that, the operation request of the Web application performs more than one operation to a record, the change entry only contains the operation of the last time, for example, when the number of a purchased product is selected, the required number may be selected for several times, the change entry corresponding to the product only saves the final selected number; if several inputs and modifications have been made in an edit box on a Web page, then the change entry corresponding to the edit box only saves the content after the final modification. It should be noted that the old value (oldValue) in the attribute of the event corresponding to the operation is the record value before the database transaction is preformed, but not the record value before a certain database operation is performed, because one database transaction may have several database operations, the record value before the database transaction is performed is the record value before the first database operation in the database transaction. For example, one database transaction performs two update operations to a certain record, processes the operations in combination when the attribute of the database event is generated, that is, the change entry only includes the final operation of the record, it is obviously inaccurate if the record value before the final update operation is taken as the old value (oldValue) of the corresponding change entry for the combined operations.

Taking an e-commerce Web application as an example, a browser displays a list of selected items in a shopping basket (or a shopping cart) on a page, then another web page of this website is opened for showing specific commodities, and then adding to the shopping basket is clicked. In this way, the optimal solution is to automatically refresh the list of items and display the newly-added shopping basket by the user on the shopping basket page. Embodiments of the present invention may be implemented as follows:

The content record of the shopping basket is stored in the local Web database, and a database event (database) is generated when a product is added in the shopping basket on the commodity display page (corresponding to page A in FIG. 3), that is, the Web application performs a database addition operation.

The database event is monitored on the shopping basket page (corresponding to page B in FIG. 3), and then the list of items in the shopping basket is updated in the event handling function. The Web application can directly obtain a new content value of the newly-added data entry from the database event, without having to access the database, and can directly add new commodity information to the list of items in the shopping basket to keep synchronization between page A and page B.

In terms of a browser, the component element of the browser is not limited to different pages of one Web application, but may relate to obtaining data change between Web applications, for example, obtaining data change between two same Web applications or obtaining data change between two different Web applications; the Web application herein can be a certain plug-in of the browser, or a certain object of the page created by the browser, or a constituent part of the browser itself. FIG. 6 is a signaling schematic diagram of a second Web application obtaining data change in a first Web application, which includes the processes as follows:

S201: Obtain an operation request of the first Web application, and complete an operation to a Web database according to the operation request; where the first Web application and the second Web application run in the browser;

S202: Generate a database event according to the operation completed in the Web database, and the database event is monitored by the second Web application;

S203: The second Web application obtains a changed content of the database from an attribute of the database event when detecting generation of the database event.

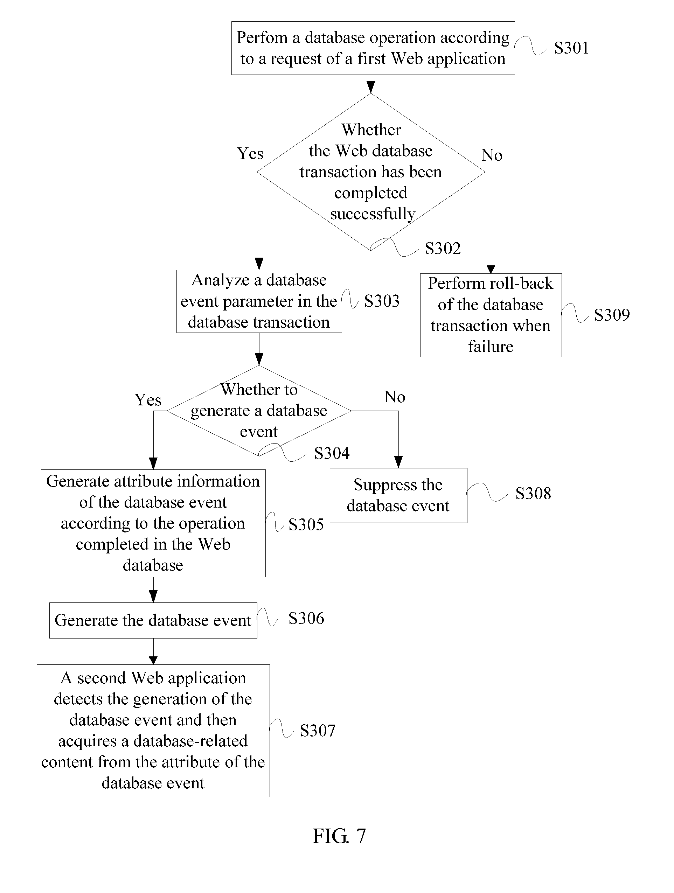

This embodiment achieves that the second Web application monitors the database time generated after the operation request of the first Web application is completed, reduces coupling between the first Web application and the second Web application, and improves independence of data operation. FIG. 7 describes detailed processing steps of generating the database event by a browser according to an embodiment of the present invention, and is a specific application of the method shown in FIG. 6; in this embodiment, a set of one or more operation requests of the

Web application is called a database transaction.

Step S301, A browser obtains an operation request of the first Web application, creates a Web database transaction according to the operation request, and completes various operations to a Web database in the Web database transaction;

Step S302, Judge whether the Web database transaction has been completed successfully, if no, proceed to step S309, perform roll-back of the Web database transaction; if yes, perform step S303;

Step S303, Analyze a database event parameter in the database transaction;

Step S304, Judge whether to generate a database event, if yes, perform step S305, otherwise, perform step S308;

Step S305, Generate an attribute of the database event according to the operation completed in the Web database;

Step S306, Generate the database event;

Step S307, A second Web application detects the generation of the database event, and then obtains a database-related content from the attribute of the database event.

Step S308, Suppress the database event, that is, not generate the database event.

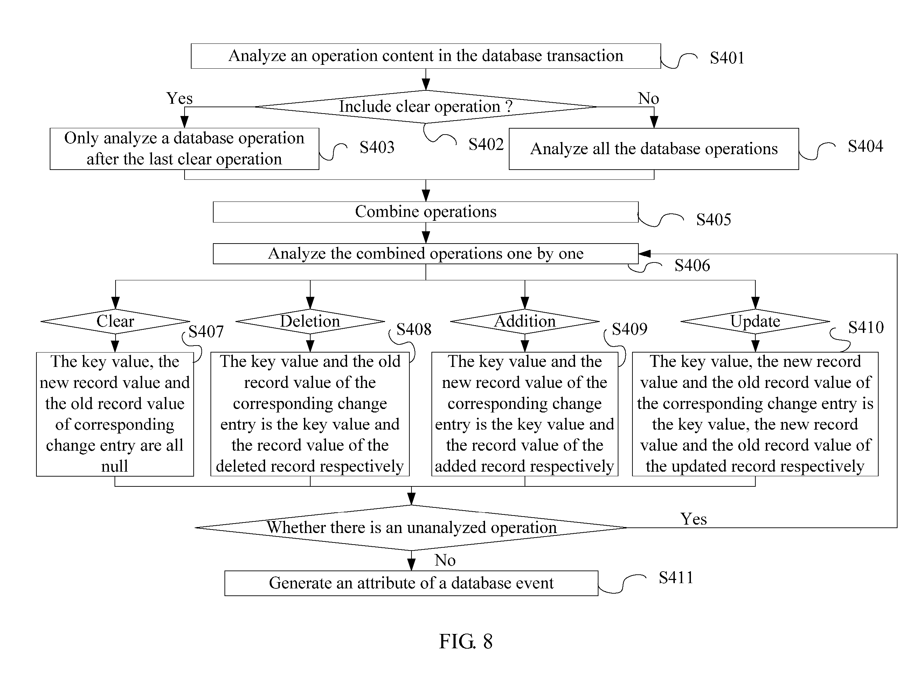

The browser analyzes the operation content in the database transaction, and generates a corresponding attribute of database event, one database transaction may include various database operations and even multiple operations performed to the same record, and can be processed in combination, thereby simplifying the attribute content of the generated database event while exactly corresponding to the change of the database. As shown in FIG. 8, the above step S305 further includes sub-steps as follows according to an embodiment of the present invention:

Step S401, Analyze an operation content completed in the Web database;

Step S402, Judge whether the operation content includes clear operation; if no, then perform step S404, analyze all database operations; if yes, perform step S403, for a database, a table or an entry to which the clear operation has be performed, only analyze a database operation on the database, the table or the entry after the last clear operation, and discard analysis of the database operations before the clear operation;

Step S405, Combine operations; for a record with more than one operation, only analyze the last operation of the record;

Step S406, Analyze the combined operations one by one, if the operation type is clear, then perform step S407, the key value, the new record value and the old record value of the corresponding change entry are all null; if the operation type is deletion, then perform step S408, the key value of the corresponding change entry is the key value of the deleted record, and the old record value of the corresponding change entry is the record value of the deleted record; if the operation type is addition, then perform step S409, the key value of the corresponding change entry is the key value of the added record, and the new record value of the corresponding change entry is the record value of the added record; if the operation type is update, then perform step S410, the key value of the corresponding change entry is the key value of the updated record, the new record value of the corresponding change entry is the new record value of the updated record, and the old record value of the corresponding change entry is the old record value of the updated record;

If there is an unanalyzed operation, then the browser continues to perform step S406, otherwise perform step S411, generates an attribute of a database event to include the change entry obtained above.

In this embodiment, judging and processing of the clear operation are added to simplify the records of the database operations; and then the records of the database operations are processed in combination to obtain the final database operation, so as to generate the attribute of the database event accurately.

Preferably, step S305 can only record change information describing the Web database, and the change information includes a database name, a table name and identifiers of elements in a change entry, which have been operated in the database according to the operation request of the Web application; where the identifiers of the elements in the change entry includes: an identifier corresponding to the key value, an identifier corresponding to the new record value and an identifier corresponding to the old record value; as shown in FIG. 4, the identifier corresponding to the old record value is oldValues, while the old record value is an actual value of oldValues. Then step S307 performs the operations as follows: the second Web application performs a content operation corresponding to the attribute of the database event in the Web database, and the operation can be a simple obtaining of the content corresponding to the attribute of the database event in the Web database.

Except having different registered objects in the time processing component and having differences in sending, both of monitoring the database event between two applications in the same browser and monitoring two pages of the same application can apply the same mode in other aspects, and the details will not be described herein again.

In embodiments of the present invention, a computer-readable storage medium can store instructions, when the instructions are executed by a computer, and the computer executes the method for making a Web application obtain a database change.

While the embodiments of the present invention have been described, but are not intended to limit the patent scope of the present invention, all the equivalent structures or equivalent flow process alternatives made to the description and accompanying drawings, or directly or indirectly application in other relevant technical fields, likewise fall within the protection scope of the present invention.

## Claims

1. A system for making a Web application obtain a database change, comprising a browser, a Web database, and a Web application running in the browser, wherein the browser comprises:
a database processing component of the browser, configured to obtain an operation request of the Web application, and complete an operation to the Web database according to the operation request; and
an event processing component of the browser, configured to generate a database event according to the operation completed in the Web database, wherein the database event is monitored by the Web application, and the Web application obtains database change content from an attribute of the database event when detecting generation of the database event.

2. The system according to claim 1, wherein, the Web application comprises a first page and a second page, the system specifically comprises:
the database processing component of the browser is configured to obtain the operation request of the Web application, and complete the operation to the Web database according to the operation request; wherein the operation request derives from the first page of the Web application;
the event processing component of the browser is configured to generate the database event according to the operation completed in the Web database, wherein the database event is monitored by the Web application; the Web application obtaining the database change content from the attribute of the database event when detecting the generation of the database event, and performing synchronous processing to a portion related to the database change content in the second page.

3. The system according to claim 1 or 2, wherein the attribute of the database event specifically comprises:
change information that describes the Web database, wherein the change information comprises an database name, a table name and a change entry that have been operated in the database according to the operation request of the Web application;
obtaining, by the Web application, content relevant to the database from the attribute of the database event, specifically comprises:
obtaining, by the Web application, the database name, the table name and the change entry from the attribute of the database event, and determining the Web database change content.

4. The system according to claim 3, wherein the change entry specifically comprises:
one or more of: an operation type of a data record, a key value, a new record value or an old record value.

5. The system according to claim 4, wherein the change entry at least comprises one of following operation types:
when the operation type is clear, the key value, the new record value and the old record value of a corresponding change entry are all null;
when the operation type is deletion, the key value of the corresponding change entry is a key value of a deleted record, and the old record value of the corresponding change entry is a record value of the deleted record;
when the operation type is addition, the key value of the corresponding change entry is a key value of an added record, and the new record value of the corresponding change entry is a record value of the added record;
when the operation type is update, the key value of corresponding change entry is a key value of an updated record, the new record value of the corresponding change entry is a new record value of the updated record, and the old record value of corresponding change entry is an old record value of the updated record.

6. The system according to claim 5, wherein, if the operation request of the Web application in the browser is a put operation, the completing the operation to the Web database according to the operation request, further comprises:
the database processing component of the browser checks, according to the database name, the table name and the key value in the operation, whether the database already has a record with the same database name, the table name and the key value, if the record already exists, then determines to change the put operation to entry update; if the database has no corresponding records, then determines to change the put operation to entry addition.

7. The system according to claim 5, wherein the change entry is arranged in a time sequence of a corresponding database operation,
if, in the operation request of the Web application, more than one operation is performed to a record, then, with regard to the record, the change entry only contains the operation of the last time.

8. The system according to any one of claims 1 to 7, wherein:
the Web application in the browser monitors the database event using one of: window, document, body or database object.

9. A method for making a Web application obtain a database change used in an environment comprising a browser, a Web database, a first Web application and a second Web application, comprising:
obtaining an operation request of the first Web application, and completing an operation to the Web database according to the operation request; wherein the first Web application and the second Web application run in the browser;
generating a database event according to the operation completed in the Web database, and the database event is monitored by the second Web application; and
obtaining, by the second Web application, database change content from an attribute of the database event when detecting generation of the database event.

10. The method according to claim 9, wherein the attribute of the database event specifically comprises:
change information that describes the Web database, wherein the change information comprises a database name, a table name and a change entry to be operated by the operation request of the first Web application;
obtaining, by the second Web application, content relevant to the database from the attribute of the database event, specifically comprises:
obtaining, by the second Web application, the database name, the table name and the change entry from the attribute of the database event, and determining the Web database change content.

11. The method according to claim 10, wherein the change entry specifically comprises:
one or more of an operation type of a data record, a key value, a new record value or an old record value.

12. The method according to claim 11, wherein the change entry at least comprises one of following operation types:
when the operation type is clear, the key value, the new record value and the old record value of a corresponding change entry are all null;
when the operation type is deletion, the key value of the corresponding change entry is a key value of a deleted record, and the old record value of the corresponding change entry is a record value of the deleted record;
when the operation type is addition, the key value of the corresponding change entry is a key value of an added record, and the new record value of corresponding change entry is a record value of the added record;
when the operation type is update, the key value of the corresponding change entry is a key value of an updated record, the new record value of the corresponding change entry is a new record value of the updated record, and the old record value of the corresponding change entry is an old record value of the updated record.

13. The method according to claim 12, wherein, if the operation request of the first Web application in the browser is a put operation, the completing the operation to the Web database according to the operation request, specifically comprises:
checking, according to the database name, the table name and the key value in the operation, whether the database already has a record with the same database name, the table name and the key value, if the record already exists, then determining to change the put operation to entry update; if the database has no corresponding records, then determining to change the put operation to entry addition.

14. The method according to any one of claims 9 to 13, further comprising:
carrying a database event parameter in the operation request of the first Web application, so as to determine, according to the parameter, whether to generate a database event after a database transaction is completed successfully.
